# FASCICULE DE BREVET EUROPEEN

(11) **EP 3 563 557 B1**
(45) Date de publication et mention de la délivrance du brevet: **01.10.2025**
(21) Numéro de dépôt: 17832527.0
(22) Date de dépôt: 21.12.2017
(51) Int. Cl.: H04L 67/125, H04L 9/40

(54) **PROCÉDÉ DE CONFIGURATION D'ACCÈS, DE COMMANDE ET DE SUPERVISION À DISTANCE D'AU MOINS UN DISPOSITIF DOMOTIQUE APPARTENANT À UNE INSTALLATION DOMOTIQUE**
VERFAHREN ZUR KONFIGURATION DES ZUGANGS ZU SOWIE DER FERNSTEUERUNG UND ÜBERWACHUNG VON MINDESTENS EINER HEIMAUTOMATIONSVORRICHTUNG ALS TEIL EINER HEIMAUTOMATISIERUNGSANLAGE
METHOD FOR CONFIGURING ACCESS TO, REMOTE CONTROLLING, AND MONITORING AT LEAST ONE HOME AUTOMATION DEVICE FORMING PART OF A HOME AUTOMATION INSTALLATION

(30) Priorité: 28.12.2016 FR 1663453
(43) Date de publication de la demande: 06.11.2019
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2017/053775
(87) Numéro de publication internationale: WO 2018/122509

(56) Documents cités:
- EP-A1- 2 416 600
- WO-A1-02/093502
- US-A- 5 944 794
- US-A1- 2014 159 879
- US-A1- 2016 277 413

## Description

### Domaine de l'invention

La présente invention concerne un procédé de configuration d'accès, un procédé de commande et un procédé de supervision d'au moins un dispositif domotique d'une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Les utilisateurs peuvent souhaiter utiliser des services tiers pour exploiter les données générées par les dispositifs domotiques de l'installation ou permettre un contrôle par des services tiers.

Toutefois, l'hétérogénéité des dispositifs domotiques et la gestion de l'accès à chaque dispositif visant à assurer la sécurité de l'installation domotique, rendent difficile une telle ouverture du système.

Le document WO 02093502 divulgue une méthode et un système pour fournir un accès sélectif aux appareils par des terminaux dans un environnement intelligent.

Un autre document de l'art antérieur EP2416600 divulgue une méthode d'accès Wi-Fi, un point d'accès et un système d'accès Wi-Fi pour réaliser l'accès sécurisé d'un dispositif Wi-Fi avec des coûts relativement faibles.

Un autre document de l'état de la technique, US2016277413, divulgue l'exécution d'une commande pour faire passer automatiquement les API à utiliser des API publiques aux API privées lorsqu'un utilisateur rentre chez lui depuis l'extérieur.

Un autre document de l'état de la technique, US2014159879, divulgue la fourniture d'un enregistrement sur un site distant qui peut inclure un module de surveillance capable de communiquer avec un site distant et un protocole d'enregistrement utilisé par le module de surveillance et le site distant pour générer les messages communiqués au cours du processus d'enregistrement.

Un dernier document de l'art antérieur, US5944794, divulgue un système de gestion des données d'identification de l'utilisateur pour un système informatique en réseau formé d'une pluralité d'ordinateurs mutuellement connectés par un réseau.

La présente invention a pour but de résoudre tout ou partie des inconvénients mentionnés ci-dessus.

### Exposé de l'invention

L'invention est limitée uniquement par la portée des revendications annexées. cet effet, la présente invention concerne un procédé de configuration d'accès à distance à au moins un dispositif domotique appartenant à une installation domotique, l'installation domotique comprenant l'au moins un dispositif domotique et au moins une unité centrale de commande, le procédé étant mis en œuvre par un premier service d'accès à distance exécuté par une unité de gestion et comprenant les étapes suivantes :
- Réception d'une demande d'accès à distance concernant au moins un dispositif domotique rattaché au profil d'un utilisateur au profit d'un deuxième service, la demande étant relative à un identifiant de l'utilisateur auprès du premier service;
- Réception d'une autorisation de la demande d'accès par l'utilisateur ;
- Configuration d'un référentiel de droit d'accès afin d'accepter au moins un ordre de commande en provenance d'un deuxième service ou l'envoi de données de supervision vers le deuxième service pour le compte du dispositif domotique rattaché au profil de l'utilisateur.

Grâce aux dispositions selon l'invention, un deuxième service peut obtenir un accès à au moins un dispositif domotique appartenant à une installation domotique de façon aisée en préservant un contrôle par l'utilisateur, et sans à avoir à mettre en place une infrastructure d'accès au dispositif domotique, par l'intermédiaire du premier service.

Selon un mode de mise en oeuvre, l'acceptation d'accès à distance du deuxième service peut être globale pour une installation donnée rattachée au compte utilisateur de l'utilisateur, ou ne concerner qu'un groupe de dispositifs ou un dispositif domotique particulier. De la même façon, cette inscription peut concerner l'ensemble des variables d'état ou des commandes d'un dispositif, ou concerner un sous-ensemble des variables d'état ou des commandes d'un dispositif concerné en fonction d'un filtrage.

Selon un mode de mise en oeuvre, le référentiel de droit d'accès stocke la correspondance entre un deuxième service et les actions autorisées sur des ressources du premier service. Une ressource peut notamment comprendre un identifiant d'un élément logique d'une installation domotique ou d'un dispositif domotique sous le contrôle du premier service.

La portée ou granularité de l'autorisation d'accès peut être prédéfinie en fonction du service concerné par la demande d'accès, ou bien par l'émetteur de l'autorisation. Différents niveaux de granularité peuvent être prévus en fonction des possibilités du premier service.

Ainsi une ressource pourra être constituée d'une installation entière ou bien d'un dispositif domotique ou d'un ensemble de dispositifs, ou même d'une ou plusieurs commandes ou fonctions ou variables d'états d'un dispositif domotique.

Selon un mode de mise en oeuvre, le deuxième service procède à la création d'un compte pour l'utilisateur, avec un identifiant correspondant Usr1ID2, et peut enregistrer la correspondance entre l'identifiant Usr1ID1 de l'utilisateur sur le premier service, et l'identifiant Usr1ID2 de l'utilisateur sur le deuxième service, ainsi que le jeton d'identification correspondant.

Selon un mode de mise en oeuvre, le deuxième service communique ensuite au premier service une confirmation de la création du compte utilisateur et optionnellement l'identifiant créé Usr1ID2.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique en vue de la réalisation d'une action par ce dispositif ou de l'obtention en retour d'une information, par exemple d'une information relative à une variable d'état de ce dispositif.

Selon un mode de mise en oeuvre, l'unité de gestion exécutant le premier service est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, l'unité de gestion exécutant le premier service peut être une unité centrale destinée à être reliée à une ou plusieurs unités centrales de commande sur des réseaux privés ou locaux distincts, ou encore sur le même réseau local.

L'unité de gestion exécutant le deuxième service est un serveur connecté à distance avec l'unité de gestion exécutant le premier service. Comme précédemment, le terme serveur est une désignation logique qui peut recouvrir l'utilisation de plusieurs serveurs physiques pour répartir la charge de traitement informatique à réaliser.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Au sens de la présente invention, un premier service correspond à un service utilisateur destiné au contrôle de l'installation domotique par un utilisateur final. Le service utilisateur est un service informatisé accessible à distance, qui permet l'accès à au moins une fonction de contrôle ou de supervision d'une installation domotique ou d'un dispositif domotique, au moyen d'une interface utilisateur. L'interface utilisateur peut être accessible par une interface graphique, ou par l'intermédiaire d'une interface de programmation.

Un deuxième service correspond à un service tiers, qui est à même de générer au moins une instruction à distance pour la réalisation d'au moins une commande pour au moins un dispositif domotique d'une installation ou de traiter des données en provenance d'au moins un dispositif domotique.

Le premier service peut être sous le contrôle d'une première entité et le deuxième service peut être sous le contrôle d'une deuxième entité.

Selon un mode de mise en oeuvre, l'étape de configuration comprend une étape de génération d'un jeton d'identification pour le deuxième service.

Selon un mode de mise en oeuvre, la réception d'une autorisation de demande d'accès va entraîner la génération d'un jeton d'identification du deuxième service par le premier service. Cette disposition permet d'identifier de manière sécurisée les requêtes provenant d'un deuxième service. Ainsi un deuxième service, accepté par un utilisateur associé à une installation domotique gérée par le premier service et contenant au moins un dispositif domotique, devra fournir le jeton d'identification dans sa requête au premier service.

Selon un mode de mise en oeuvre, le jeton d'identification est ensuite transmis au deuxième service, directement ou par l'intermédiaire de l'émetteur du message d'acceptation.

Selon un mode de mise en oeuvre, ce jeton d'identification peut être à validité permanente ou limitée dans le temps.

Selon un mode de mise en oeuvre, ce jeton sera stocké dans le référentiel d'accès. Cette disposition permet d'effectuer la correspondance avec les autorisations sur les ressources.

Selon un mode de mise en oeuvre, la demande d'accès à distance est reçue en provenance du deuxième service.

Selon un mode de mise en oeuvre, La demande d'accès à distance peut identifier l'utilisateur par l'identifiant Usr1ID1.

Selon un mode de mise en oeuvre qui correspond à un premier cas, l'utilisateur, par l'intermédiaire d'un terminal utilisateur, demande une inscription au deuxième service directement auprès de ce deuxième service. Ainsi, dans ce cas, l'utilisateur émet une demande d'inscription à destination de ce deuxième service. Dans une étape simultanée ou distincte, l'utilisateur transmet également au deuxième service l'identifiant Usr1ID1 qui identifie l'utilisateur auprès du premier service. Le deuxième service procède à la création d'un compte pour l'utilisateur, avec un identifiant correspondant Usr1ID2.

Selon un mode de mise en oeuvre, le procédé comprend l'étape suivante, préalable à l'étape de réception d'une autorisation :
- Demande d'une acceptation ou une confirmation de la demande d'accès au profit du deuxième service à l'utilisateur.

Selon un mode de mise en oeuvre, l'utilisateur reçoit la demande d'acceptation par l'intermédiaire de son terminal.

Selon un mode de mise en oeuvre, qui correspond au premier cas, l'utilisateur confirme son acceptation ou autorisation de la demande d'accès dans une réponse qui est reçue par le premier service dans une étape distincte de la réception de la demande d'accès.

Selon un mode de mise en oeuvre, la demande d'accès à distance au profit du deuxième service est reçue en provenance de l'utilisateur.

Ainsi, selon un mode de mise en oeuvre qui correspond à un deuxième cas, l'utilisateur par l'intermédiaire d'un terminal utilisateur demande une inscription au deuxième service par l'intermédiaire du premier service. Dans ce cas, l'étape de réception d'une demande d'accès et l'étape d'acceptation peuvent être confondues.

Selon un mode de mise en oeuvre, le procédé comprend en outre l'étape suivante :
- Envoi d'au moins un message contenant une liste de deuxièmes services disponibles à destination de l'utilisateur ou d'un terminal utilisateur ;
- L'étape de réception d'une demande d'inscription et d'acceptation Min/Mac correspond à une sélection d'un deuxième service dans la liste de deuxièmes services contenue dans le message.

Selon un mode de mise en oeuvre, le procédé comprend en outre l'étape suivante, préalable à l'étape d'envoi d'un message contenant une liste des deuxièmes services disponibles :
- Réception d'un message de requête en provenance de l'utilisateur afin d'obtenir une liste de deuxièmes services disponibles auprès du premier service.

Selon un mode de mise en oeuvre, le procédé comprend en outre l'étape suivante :
- Envoi d'un message d'acceptation/d'inscription à destination du deuxième service.

Selon un mode de mise en oeuvre, l'étape d'envoi d'un message d'acceptation/d'inscription à destination du deuxième service par le premier service est postérieure à l'étape de configuration.

Selon un mode de mise en oeuvre, le procédé comprend l'étape suivante
- Envoi d'au moins un message de description, ou de transmission d'une vue filtrée de l'installation ou d'un groupe de dispositifs domotiques comprenant au moins un dispositif, à destination du deuxième service.

Selon un mode de mise en oeuvre, le procédé comprend une étape additionnelle d'inscription du deuxième service comme souscripteur à des évènements concernant l'au moins un dispositif.

La présente invention concerne également un procédé de configuration d'accès à distance à au moins un dispositif domotique appartenant à une installation domotique, l'installation domotique comprenant l'au moins un dispositif domotique et au moins une unité centrale de commande, l'installation domotique étant accessible par un premier service d'accès à distance, le procédé étant mis en œuvre par un second service d'accès à distance et comprenant les étapes suivantes :
- Réception d'une autorisation d'une demande d'accès par l'utilisateur; la demande d'accès à distance concernant au moins un dispositif domotique rattaché au profil d'un utilisateur au profit d'un deuxième service;
- Configuration d'un profil ou compte pour l'utilisateur sur le deuxième service et enregistrement d'une correspondance entre un identifiant de l'utilisateur sur le premier service, et l'identifiant de l'utilisateur sur le deuxième service.

Selon un mode de mise en oeuvre, La demande d'accès à distance peut identifier l'utilisateur par l'identifiant Usr1ID1.

Selon un mode de mise en oeuvre qui correspond à un premier cas, l'utilisateur, par l'intermédiaire d'un terminal utilisateur, demande une inscription au deuxième service directement auprès de ce deuxième service. Ainsi, dans ce cas, l'utilisateur émet une demande d'inscription à destination de ce deuxième service Svc2. Dans une étape simultanée ou distincte, l'utilisateur transmet également au deuxième service l'identifiant Usr1ID1 qui identifie l'utilisateur auprès du premier service. Le deuxième service procède à la création d'un compte pour l'utilisateur Usr1, avec un identifiant correspondant Usr1ID2.

Selon un deuxième cas, l'inscription au deuxième service est demandée auprès du premier service.

Selon un mode de mise en oeuvre, le procédé comprend une étape de réception d'un jeton d'identification auprès du premier service.

Selon un mode de mise en oeuvre, le procédé comprend une étape d'enregistrement d'un jeton d'identification auprès du premier service en correspondance avec un profil ou compte utilisateur.la présente invention concerne également un procédé de configuration d'accès à distance à au moins un dispositif domotique appartenant à une installation domotique, l'installation domotique comprenant l'au moins un dispositif domotique et au moins une unité centrale de commande, le procédé étant mis en œuvre par un premier service d'accès à distance exécuté par une unité de gestion et comprenant les étapes suivantes :
- Réception d'un message d'information concernant une présence du dispositif domotique en provenance d'une unité centrale de commande à laquelle est rattaché le dispositif ;
- Détermination d'un deuxième service associé à un type du dispositif domotique pour lequel un accès à distance doit être configuré avec des règles d'accès correspondantes ;
- Configuration d'un référentiel de droit d'accès afin d'accepter au moins un ordre de commande en provenance du deuxième service ou l'envoi de données de supervision vers le deuxième service pour le compte du dispositif domotique.

Grâce aux dispositions selon l'invention, un deuxième service peut obtenir un accès à au moins un dispositif domotique appartenant à une installation domotique de façon aisée en préservant un contrôle par l'unité de gestion, et sans à avoir à mettre en place une infrastructure d'accès au dispositif domotique, par l'intermédiaire du premier service.

Selon un mode de mise en oeuvre, le référentiel de droits d'accès peut utiliser des algorithmes de calcul prenant en entrée les informations du dispositif, de la variable d'état et du deuxième service (type, identifiant et valeur) et fournissant en retour un résultat booléen indiquant si l'accès est autorisé. Ces dispositions permettent de limiter les données stockées dans le référentiel en utilisant des règles logiques de détermination des autorisations pour un dispositif donné et de limiter les recherches extensives dans ce référentiel, ce qui permet d'améliorer les performances.

Selon un mode de mise en oeuvre, le message d'information concernant la présence du dispositif domotique correspond à l'établissement d'une liaison entre l'unité centrale de commande et le dispositif domotique et/ou à la découverte du dispositif domotique par l'unité centrale de commande. La liaison est réalisée par l'intermédiaire d'un réseau, notamment d'un réseau domotique. A titre d'exemple, cette situation peut correspondre à l'installation d'un dispositif par un utilisateur ou un installateur dans une installation domotique et à l'appairage ou à la découverte du dispositif domotique avec une unité centrale de commande présente dans l'installation, ou encore à l'installation d'une unité centrale de commande et à l'appairage ou à la découverte par cette unité centrale de commande d'un dispositif domotique précédemment installé.

Selon un mode de mise en oeuvre, le dispositif domotique et/ou l'installation sont rattachés à un profil ou compte utilisateur sur le premier service. Le profil ou compte utilisateur sur le premier service peut être associé à un identifiant Usr1lD1 de l'utilisateur sur le premier service.

Selon un mode de mise en oeuvre, l'étape de détermination d'un deuxième service associé à un type du dispositif domotique pour lequel un accès à distance doit être configuré comprend une consultation d'un référentiel de définition de règles d'accès.

Selon un mode de mise en oeuvre, le référentiel de définition de règles d'accès peut comprendre au moins une association entre un type de dispositif domotique, au moins un deuxième service et optionnellement des règles d'accès ou de filtrages. Le référentiel de définition de règles d'accès, qui peut être compris dans le référentiel de droit d'accès ou distinct, mais accessible par le premier service.

Selon un mode de mise en oeuvre, l'étape de configuration comprend une étape de génération d'un jeton d'identification pour le deuxième service.

Selon un mode de mise en oeuvre, le procédé de configuration comprend l'étape suivante, préalable à l'étape de configuration :
- Demande d'une autorisation d'accès au profit du deuxième service à l'utilisateur.

Selon un mode de mise en oeuvre, l'utilisateur reçoit la demande d'acceptation par l'intermédiaire d'un terminal.

Selon un mode de mise en oeuvre, qui correspond au premier cas, l'utilisateur confirme son acceptation ou autorisation de la demande d'accès dans une réponse qui est reçue par le premier service.

Selon un mode de mise en oeuvre, le procédé de configuration comprend l'étape suivante :
- Envoi d'un message d'acceptation/d'inscription à destination du deuxième service.

Selon un mode de mise en oeuvre, l'étape d'envoi d'un message d'acceptation/d'inscription à destination du deuxième service par le premier service est postérieure à l'étape de configuration.

Selon un mode de mise en oeuvre, le procédé de configuration comprend l'étape suivante :
- Envoi d'au moins un message de description, ou de transmission d'une vue filtrée de l'installation ou d'un groupe de dispositifs domotiques comprenant au moins un dispositif, à destination du deuxième service.

Selon un mode de mise en oeuvre, le procédé comprend une étape additionnelle d'inscription du deuxième service comme souscripteur à des évènements concernant l'au moins un dispositif.

La présente invention concerne également un procédé de configuration d'accès à distance à au moins un dispositif domotique appartenant à une installation domotique, l'installation domotique comprenant l'au moins un dispositif domotique et au moins une unité centrale de commande, l'installation domotique étant accessible par un premier service d'accès à distance, le procédé étant mis en œuvre par un second service d'accès à distance et comprenant les étapes suivantes :
- Réception d'une autorisation d'accès concernant au moins un dispositif domotique au profit du deuxième service;
- Configuration d'un profil ou compte pour un utilisateur sous le contrôle duquel est placé le dispositif domotique sur le deuxième service et enregistrement d'une correspondance entre un identifiant de l'utilisateur sur le premier service, et l'identifiant de l'utilisateur sur le deuxième service.

Selon un mode de mise en oeuvre, L'autorisation d'accès à distance peut identifier l'utilisateur par l'identifiant Usr1ID1.

Selon un mode de mise en oeuvre, le procédé comprend une étape de réception d'un jeton d'identification auprès du premier service.

Selon un mode de mise en oeuvre, le procédé comprend une étape d'enregistrement d'un jeton d'identification auprès du premier service en correspondance avec un profil ou compte utilisateur.

La présente invention concerne également un procédé de commande à distance d'au moins un dispositif domotique appartenant à une installation domotique, l'installation domotique comprenant l'au moins un dispositif domotique et au moins une unité centrale de commande, le procédé étant mis en œuvre par un premier service d'accès à distance exécuté par une unité de gestion et comprenant les étapes suivantes :
- réception d'un message de commande concernant au moins une commande à réaliser sur l'au moins un dispositif domotique en provenance d'un deuxième service ;
- vérification de l'autorisation de la commande demandée dans le message pour le service auprès d'un référentiel de droits d'accès ;
- dans le cas où la commande est autorisée pour le deuxième service, envoi d'au moins un message de commande à destination d'au moins une unité centrale de commande à laquelle est rattachée l'au moins un dispositif domotique concerné par la commande.

Selon un mode de mise en oeuvre, la vérification de l'autorisation consiste à vérifier si elle concerne au moins un dispositif domotique pour lequel un accès à distance a été autorisé, et/ou si la commande ou la fonction concernée est autorisée pour ce dispositif domotique pour le deuxième service.

Selon un mode de mise en oeuvre, le jeton est obtenu lors d'une étape d'autorisation préalable.

Le format du message de commande reçu par le premier service peut être distinct de celui du message de commande envoyé à l'unité centrale de commande, une conversion de format pouvant être réalisée par le premier service.

Selon un mode de mise en oeuvre, l'unité centrale de commande émet un message de commande à destination du dispositif domotique concerné par la commande qui le reçoit dans une étape. Le format de ce message peut être distinct de celui du message, une conversion de format pouvant être réalisée par l'unité centrale de commande. Selon un mode de mise en oeuvre, le dispositif domotique effectue ensuite la commande. Le dispositif domotique peut communiquer un code retour ou un résultat de la commande dans un message de retour à l'unité centrale de commande.

Selon un mode de mise en oeuvre, le message de commande concernant au moins une commande à réaliser sur l'au moins un dispositif domotique en provenance d'un deuxième service comprend un jeton d'identification ; le procédé comprend en outre une étape de vérification de la validité du jeton d'identification pour le service auprès du référentiel de droits d'accès.

Selon un mode de mise en oeuvre, le procédé comprend en outre les étapes suivantes :
- Réception d'un message de retour en provenance de l'unité centrale de commande à laquelle est rattaché le dispositif.
- vérification de l'autorisation de l'envoi d'un message de retour pour la commande au service auprès d'un référentiel de droits d'accès ;
- dans le cas ou la communication du code de retour de commande est autorisée pour le deuxième service, envoi d'un message de retour à destination du deuxième service.

Selon un mode de mise en oeuvre, la vérification de l'autorisation consiste à vérifier si le message de retour concerne au moins un dispositif domotique pour lequel un accès à distance a été autorisé, et/ou si le code de retour de commande ou fonction concernée est autorisée pour ce dispositif domotique pour le deuxième service concerné.

Selon un mode de mise en oeuvre, le format de ce message envoyé au deuxième service peut être distinct de celui du message communiqué par l'unité centrale de commande, une conversion de format pouvant être réalisée par le premier service.

Selon un mode de mise en oeuvre, le procédé de commande comprend les étapes d'un procédé de configuration tel que décrit précédemment.

La présente invention concerne également un procédé de commande à distance d'au moins un dispositif domotique appartenant à une installation domotique, l'installation domotique comprenant l'au moins un dispositif domotique et au moins une unité centrale de commande, l'installation domotique étant accessible par un premier service d'accès à distance, le procédé étant mis en œuvre par un second service d'accès à distance et comprenant l'envoi d'un message de commande concernant au moins une commande à réaliser sur l'au moins un dispositif domotique à destination du premier service.

Selon un mode de mise en oeuvre, le message de commande comprend un jeton d'identification.

La présente invention concerne également un procédé de supervision à distance d'au moins un dispositif domotique appartenant à une installation domotique, l'installation domotique comprenant l'au moins un dispositif domotique et au moins une unité centrale de commande, le procédé étant mis en œuvre par un premier service d'accès à distance exécuté par une unité de gestion et comprenant les étapes suivantes :
- Réception d'un message de supervision en provenance d'une unité centrale de commande comprenant des informations concernant au moins une variable d'état de l'au moins un dispositif domotique rattaché à l'unité centrale de commande.
- Vérification de l'autorisation de l'envoi d'un message de supervision concernant la variable d'état du dispositif domotique au deuxième service auprès d'un référentiel de droits d'accès ;
- Dans le cas où l'envoi du message de supervision est autorisé, Envoi d'un message de supervision à destination du deuxième service.

Selon un mode de mise en œuvre, la vérification de l'autorisation consiste à vérifier si elle concerne au moins un dispositif domotique pour lequel un accès à distance a été autorisé, et/ou si la communication de données relative à la variable d'état concernée est autorisée pour ce dispositif domotique pour le deuxième service.

Grâce aux dispositions de l'invention, un filtrage sur un type de variable d'état peut être réalisé, voire un filtrage sur des plages de valeur de la variable d'état.

Selon un mode de mise en œuvre, le message de supervision peut correspondre à un évènement de changement de valeur de la variable d'état.

Le format du message reçu peut être distinct de celui du message envoyé, une conversion de format pouvant être réalisée par le premier service.

L'émission du message de supervision par l'unité centrale de commande peut être successive à la réception par l'unité centrale de commande d'un message de supervision en provenance du dispositif domotique. Ce message peut par exemple correspondre à un évènement de changement de valeur d'une variable d'état.

Selon une variante, dans le cas ou l'unité centrale de commande est intégrée dans le dispositif, la constitution du message de supervision peut être réalisée localement lors de la détection de l'évènement déclencheur correspondant au changement de valeur d'une variable d'état.

Selon une autre variante, dans le cas ou l'unité centrale de commande est distincte du dispositif, il est également possible que le dispositif envoie de façon périodique des messages et que ce soit l'unité centrale de commande qui opère une vérification pour repérer les changements de valeur. Enfin il est également possible que des messages de supervision soient envoyés à destination du premier service sans constatation de changement de valeur.

L'envoi du message de supervision par le premier service à destination du deuxième service peut correspondre à une notification directe entre le premier service et le deuxième service qui correspond à un envoi direct. Il est toutefois possible que d'autres mécanismes soient utilisés.

En particulier, selon une première variante, un mécanisme de file d'attente peut être mis en œuvre, les messages pouvant être stockés par le premier service sur la file d'attente, et collecté par le deuxième service de façon asynchrone.

Selon un mode de mise en œuvre, le procédé comprend une étape de vérification de la validité du jeton d'identification pour le service auprès du référentiel de droits d'accès. Ainsi, si le jeton n'est pas valide, en particulier si la validité du jeton a expiré lorsque la vérification est effectuée, aucun message de supervision n'est envoyé au deuxième service. A titre d'exemple, il peut être également prévu que le jeton pour un deuxième service soit invalidé par le premier service s'il n'existe plus d'accord entre la première entité contrôlant le premier service et la deuxième entité contrôlant le deuxième service ou encore si l'utilisateur supprime son autorisation au deuxième service Il est également possible que le jeton soit invalidé après une période prédéterminée si le jeton n'est pas renouvelé.

La présente invention concerne également un procédé de supervision à distance d'au moins un dispositif domotique appartenant à une installation domotique, l'installation domotique comprenant l'au moins un dispositif domotique et au moins une unité centrale de commande, l'installation domotique étant accessible par un premier service d'accès à distance, le procédé étant mis en œuvre par un second service d'accès à distance et comprenant la réception d'un message de supervision en provenance du premier service comprenant des informations concernant au moins une variable d'état d'un dispositif domotique.

Selon un mode de mise en œuvre, le procédé comprend un stockage local des informations relatives aux variables d'état par le deuxième service.

Selon un mode de mise en œuvre, le procédé comprend en outre l'étape suivante :
- stockage des informations relatives aux variables d'état par le premier service.

Selon un mode de mise en œuvre, un filtrage des informations est réalisé préalablement au stockage. Cette configuration est notamment utile dans le cas ou le dispositif est la propriété ou sous le contrôle d'une deuxième entité en charge du deuxième service, le premier service et éventuellement l'unité centrale de commande, étant sous le contrôle d'une première entité et agissant comme un service d'infrastructure.

Selon un mode de mise en œuvre, un stockage local des informations relatives aux variables d'état peut être réalisé par le deuxième service.

Selon un mode de mise en œuvre, le procédé de supervision comprend les étapes d'un procédé de configuration tel que décrit précédemment.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur ;
La figure 3 est un schéma représentant un serveur ou un groupe de serveur destiné à l'exécution d'un premier service d'accès à distance et un deuxième serveur ou groupe de serveur destiné à l'exécution d'un deuxième service d'accès à distance.
La figure 4a est un schéma illustrant un premier mode de mise en œuvre d'un procédé de configuration d'accès à distance à au moins un dispositif domotique d'une installation domotique.
La figure 4b est un schéma illustrant un deuxième mode de mise en œuvre d'un procédé de configuration d'accès à distance à au moins un dispositif domotique d'une installation domotique.
La figure 5 est un schéma illustrant un mode de mise en œuvre d'un procédé de configuration d'accès à distance à au moins un dispositif domotique d'une installation domotique.
La figure 6 est un schéma illustrant un mode de mise en œuvre d'un procédé de supervision à distance d'au moins un dispositif domotique d'une installation domotique.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

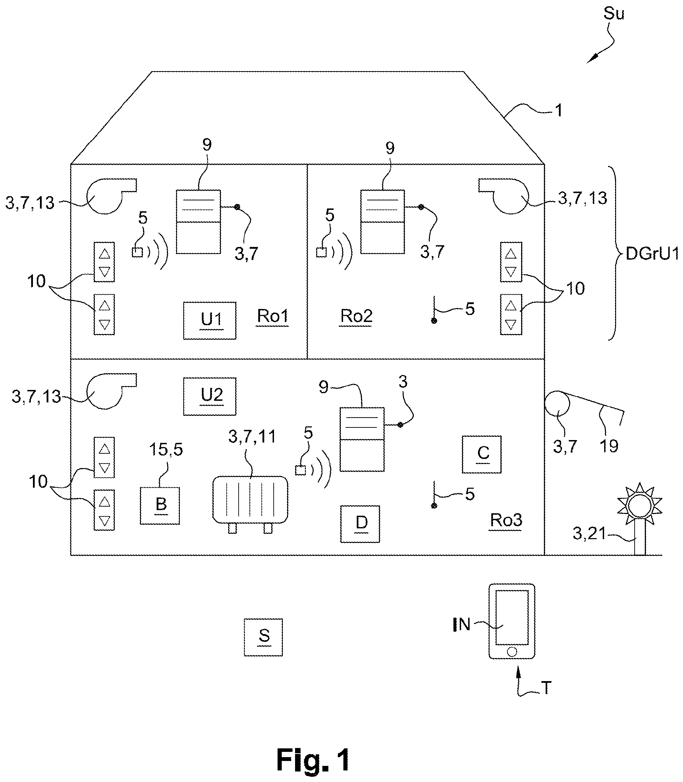

Comme illustré à la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence. L'installation peut encore comprendre un ou plusieurs capteurs de consommation électrique.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

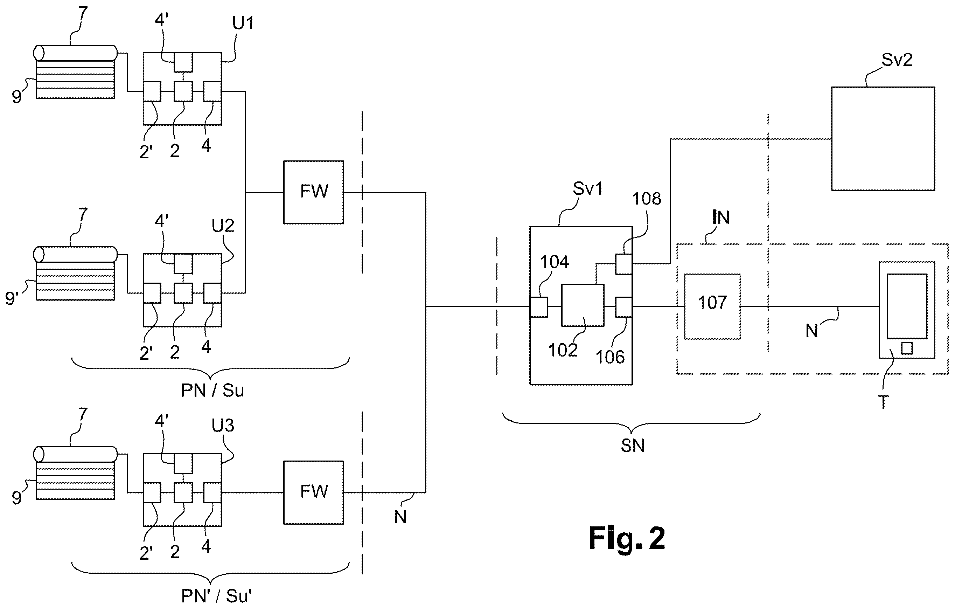

Comme cela est représenté sur la figure 2, chaque unité centrale de commande U est agencée pour communiquer avec un serveur Sv1.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le serveur Sv1 est également disposé sur un réseau privé SN. Le réseau privé PN est relié à un réseau étendu N, par exemple Internet. Bien entendu, le serveur Sv1 est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Dans le cas ou l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon un deuxième protocole de communication cible P2, avec un terminal de communication mobile T. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemple incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv1. Le serveur Sv1 permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv1 à travers un serveur intermédiaire, par exemple d'un fournisseur de service tiers, dont le serveur intermédiaire offre une interface de service ou API. Le serveur Sv1 comprend, de son côté, au moins une interface de communication 104 destinée à la communication avec l'unité centrale U.

Le serveur Sv1 peut comprendre également une interface de communication 106 destinée à la communication avec une interface de commande et/ou de contrôle IN permettant à un utilisateur final Usr1 de contrôler à distance l'installation domotique, notamment par l'intermédiaire d'un service utilisateur Sv1c1.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T1 communiquant par le réseau étendu N. Le terminal de communication mobile T1 peut être, par exemple, un téléphone intelligent ou une tablette. Le terminal de communication mobile T1 peut être le même ou un terminal du même type que celui avec lequel l'unité centrale de commande U communique en local au moyen du module de communication 4', ou un terminal différent. Nous désignerons indifféremment ces terminaux mobiles par la référence T1. Alternativement, l'utilisateur final pourrait également faire usage d'un terminal fixe.

L'interface de commande et/ou de contrôle IN1 comprend un processeur qui peut être disposé au niveau du serveur web 107 et/ou du terminal de communication mobile T1.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Le Serveur Sv1 peut également comprendre une interface de communication 108 destinée à la communication avec un autre serveur Sv2 sous la responsabilité d'une autre entité que celle qui opère le serveur Sv1 et qui propose au moins un deuxième services comme cela sera décrit ultérieurement. Cette interface permet la communication entre les deux serveurs Sv1 et Sv2 sur un réseau local ou étendu, par exemple Internet.

### Identifiant unique d'un dispositif domotique

Le serveur Sv1 et les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples

### 1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Premier service et deuxième service tiers

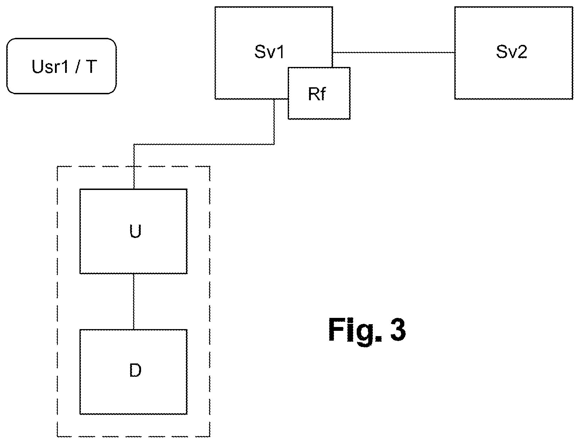

Le Serveur Sv1 ou un groupe de Serveur Sv1 héberge un ou plusieurs serveurs logiciels destinés à fournir des services, comme cela est illustré sur la figure 3.

En particulier, un premier service Svc1 correspond à un service utilisateur destiné au contrôle à distance de l'installation domotique Su par un utilisateur Usr1 final. Le service utilisateur Svc1 est un service informatisé accessible à distance, qui permet l'accès à au moins une fonction de commande ou de supervision d'une installation domotique ou d'un dispositif domotique, au moyen d'une interface utilisateur. L'interface utilisateur peut être accessible par une interface graphique, ou par l'intermédiaire d'une interface de programmation.

Un deuxième service Svc2 correspond à un service tiers, qui est à même de générer au moins une instruction à distance pour la réalisation d'au moins une commande pour au moins un dispositif domotique D d'une installation Su, ou de traiter des données en provenance d'au moins un dispositif domotique D.

Le premier service Svc1 peut être sous le contrôle d'une première entité et le deuxième service Svc2 peut être sous le contrôle d'une deuxième entité. Le deuxième service peut être considéré comme un service partenaire auquel un accès peut être accordé.

A titre d'exemple, la première entité peut être un fournisseur d'infrastructure ou de gestion d'installation domotiques, et la deuxième entité peut être un fournisseur de services en lien avec les données ou la commande de dispositifs domotique. En particulier, il est possible de considérer une installation comprenant un dispositif D de type capteur de consommation, par exemple un capteur de consommation électrique. Le deuxième service Svc2 peut proposer une fonctionnalité de suivi de consommation qui nécessite l'accès à des données de consommation générées par le capteur de consommation. A titre d'exemple, le deuxième service peut être un service utilisateur d'un fournisseur d'énergie.

### Référentiel de droit d'accès et jeton d'identification

Le premier service Svc1 met en œuvre un référentiel de droit d'accès Rf. Le référentiel de droit d'accès Rf stocke la correspondance entre un deuxième service Svc2 appelant et les actions autorisées sur des ressources Rc du premier service Svc1. Une ressource Rc est un identifiant d'un élément logique d'une installation domotique Su sous le contrôle du premier service Svc1, éventuellement agencé pour présenter différents niveaux de granularité en fonction des possibilités du service Svc1. Ainsi une ressource Rc pourra être constituée d'une installation St entière ou bien d'un dispositif domotique D ou d'un ensemble de dispositifs D, ou même d'une ou plusieurs commandes C ou fonctions ou variables d'états S d'un dispositif domotique D. Selon un mode de réalisation particulier, les ressources pourront être organisées de manière hiérarchique à l'aide d'un identifiant de ressource de type chemin d'accès correspondant par exemple à l'identifiant de dispositif DURL décrit précédemment, en ajoutant éventuellement un identifiant complémentaire de ressource Rc, ou en définissant des niveaux intermédiaires correspondant à un accès à plusieurs éléments de l'arborescence définie. Le tableau 1 ci-dessous donne un exemple d'une première structure de donnée du référentiel Rf.

**Tableau 1: Exemple de première structure de données du référentiel Rf**

| Deuxième Service Svc2 | Ressources Rc | Actions autorisées |
|---|---|---|
| Svc2 | setup/1234/sensors/temperature/* | READ |
| Svc2 | setup/1234/actuators/rollershutters/*/command/open | EXECUTE |

Dans cet exemple de référentiel, le service Svc2 est autorisé à lire les variables d'état des capteurs de température de l'installation n°1234 et à utiliser la commande « open » sur tous les actionneurs de type volet roulant.

Ainsi lorsque le deuxième service Svc2 va effectuer une demande de lecture ou de commande auprès de Svc1 sur une ressource Rc donnée, celui ci va pouvoir vérifier dans son référentiel de droits d'accès Rf si la requête peut être autorisée. De même, dans le cas où des informations relatives à des ressources Rc sous le contrôle du premier service Svc1 sont mises à jour, telles que des changements de valeur des variables d'état S des dispositifs domotiques D, celles-ci pourront être retransmises automatiquement au service Svc2 si la ressource associée Rc est autorisée en lecture dans le référentiel Rf.

Afin d'identifier de manière sécurisée les requêtes provenant du service Svc2, le service Svc1 peut utiliser un jeton d'identification Tk du service Svc2.

Ce jeton d'identification Tk peut être à validité permanente ou limitée, auquel cas il devra être renégocié régulièrement auprès du premier service Svc1. Ce jeton sera stocké dans le référentiel Rf du service Svc1 pour effectuer la correspondance avec les autorisations sur les ressources.

Ainsi un service Svc2, accepté par un utilisateur Usr1 associé à une installation domotique Su gérée par le service Svc1 et contenant un dispositif D1, devra fournir le jeton d'identification Tk associé à cette installation dans sa requête au service Svc1. Le tableau 2 ci-dessous donne un exemple d'une deuxième structure de donnée du référentiel Rf.

**Tableau 2: Exemple de deuxième structure de donnée du référentiel Rf**

| Deuxième Service Svc2 | Jeton |
|---|---|
| Svc2a | Tka |
| Svc2b | Tkb |

Le jeton d'identification pour un deuxième service peut être invalidé par le premier service s'il n'existe plus d'accord entre la première entité contrôlant le premier service et la deuxième entité contrôlant le deuxième service ou encore si l'utilisateur supprime son autorisation au deuxième service Il est également possible que le jeton soit invalidé après une période prédéterminée si le jeton n'est pas renouvelé.

A titre d'exemple, le référentiel peut être constitué par une base de données ou un service de répertoire. Ce référentiel peut être compris dans le premier service Svc1 ou externe et accessible par le premier service Svc1. Selon un mode de réalisation alternatif ou complémentaire, le référentiel de droits d'accès peut utiliser des algorithmes de calcul prenant en entrée les informations du dispositif, de la variable d'état et du deuxième service (type, identifiant et valeur) et fournissant en retour un résultat booléen indiquant si l'accès est autorisé.

### Référentiel de définition de règles d'accès

Afin de définir les droits d'accès contenus dans le référentiel de droit d'accès Rf, le premier service peut utiliser un référentiel Rf0 de définition de règles d'accès, qui peut être compris dans le référentiel de droit d'accès ou distinct, mais accessible par le premier service Svc1. L'utilisation de ce référentiel Rf0 de définition de règles d'accès sera détaillée en référence au deuxième mode de mise en œuvre d'un procédé de configuration ci-dessous.

Le référentiel Rf0 de définition de règles d'accès comprend des associations entre un type de dispositif domotique DT, au moins un deuxième service Svc2 et optionnellement des règles d'accès ou de filtrages. Ainsi, le premier service Svc1 peut déterminer un deuxième service associé au dispositif domotique D1 pour lequel un accès à distance doit être configuré avec des règles d'accès ou de filtrage correspondantes. Le type d'autorisation donné à un deuxième service Svc2 peut être défini en fonction de règles établies entre la première entité contrôlant le premier service Svc1 et la seconde entité contrôlant le deuxième service Svc2. Un exemple de table de définition de règles d'accès contenu dans le référentiel de règles d'accès Rf0 est représenté ci-dessous dans le tableau 3.

**Tableau 3: Exemple de table de définition de règles d'accès**

| Type de dispositif DT | Deuxième service | Actions autorisées |
|---|---|---|
| DT1 | Svc2_1 | READ / Temperature |
| DT2 | Svc2- | EXECUTE / Shutter Up/down |

### Procédé de configuration

### Premier mode de réalisation

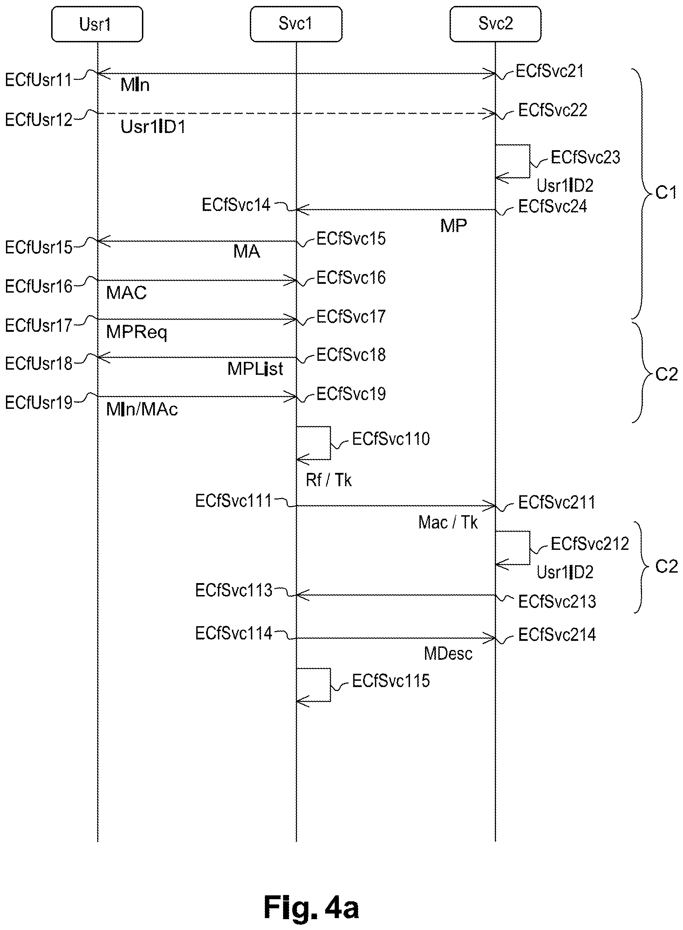

Nous allons à présent décrire un procédé de configuration d'un accès à distance à au moins un dispositif domotique D appartenant à une installation domotique Su en référence à la figure 4a.

Nous supposons que l'utilisateur Usr1 possède un compte utilisateur pour le service Svc1 avec un identifiant Usr1ID1 correspondant.

Selon un premier cas de figure C1, l'utilisateur final Usr1, par l'intermédiaire d'un terminal utilisateur T, demande une inscription au service Svc2 directement auprès du service Svc2.

Dans ce cas, dans une étape ECfUsr11, l'utilisateur final Usr1 émet une demande d'inscription auprès du deuxième service Svc2 qui reçoit cette demande dans une étape ECfSvc21.

Dans une étape simultanée ou distincte ECfUsr12, l'utilisateur final transmet également au deuxième service Svc2 l'identifiant Usr1ID1 qui identifie l'utilisateur Usr1 auprès du premier service Svc1, qui le reçoit dans une étape ECfsvc22.

Dans une étape ECfsvc23, le deuxième service Svc2 procède à la configuration ou à la création d'un profil ou compte pour l'utilisateur Usr1, avec un identifiant correspondant Usr1ID2. Le deuxième service procède également à l'enregistrement d'une correspondance entre un identifiant Usr1ID1 de l'utilisateur Usr1 sur le premier service, et l'identifiant Usr1ID2 de l'utilisateur Usr1 sur le deuxième service Svc2.

Dans une étape ECfsvc24, le deuxième service Svc2 émet une demande MP d'accès au premier service Svc1 qui la reçoit dans une étape ECfsvc14. La demande d'accès peut identifier l'utilisateur Usr1 par l'identifiant Usr1ID1.

Dans une étape ECfSvc15, le premier service peut demander une acceptation ou une confirmation de l'acceptation de l'accès à l'utilisateur Usr1, par exemple par l'intermédiaire de son terminal T, qui le reçoit dans une étape ECfUsr15.

Dans une étape ECfUsr16, l'utilisateur confirme son acceptation de l'accès dans une réponse MAC qui est reçue par le service Svc1 dans une étape ECfSvc16.

Selon un deuxième cas de figure C2, l'utilisateur final Usr1, par l'intermédiaire d'un terminal utilisateur T demande une inscription au deuxième service Svc2 auprès du premier service Svc1.

Dans ce cas, dans une étape ECfUsr17, l'utilisateur final Usr1 émet une requête MPreq afin d'obtenir une liste des deuxièmes services disponibles et supportés auprès du premier service Svc1 qui reçoit cette demande dans une étape ECfSvc27.

Dans une étape ECfScv18, le premier service Svc1 retourne une réponse MPList contenant une liste des deuxièmes services disponibles qui est reçue par l'utilisateur dans une étape ECfUsr18.

Dans une étape ECfUsr19, l'utilisateur final Usr1 sélectionne un service partenaire et émet une demande d'inscription et d'acceptation Min/Mac auprès du premier service Svc1 qui reçoit cette demande qui correspond à une demande d'accès pour le deuxième service Svc2 et à une autorisation dans une étape ECfSvc19.

L'acceptation de ce service partenaire peut être globale pour une installation donnée rattachée au compte utilisateur de l'utilisateur Usr1, ou ne concerner qu'un groupe de dispositif ou un dispositif domotique D particulier. De la même façon, cette inscription peut concerner l'ensemble des variables d'état ou des commandes d'un dispositif, ou concerner un sous-ensemble des variables d'état ou des commandes d'un dispositif concerné en fonction d'un filtrage. A titre d'exemple, dans le cas d'un deuxième service Svc2 visant à proposer une optimisation énergétique, seule la lecture des valeurs des variables d'état S relatives aux dispositifs domotiques D correspondant à des capteurs de température ou des capteurs de consommation et/ou la commande C d'un mode de chauffage (eco, confort) de l'installation peut être autorisé pour le service Svc2. La consultation des variables d'état ou le déclenchement de commande concernant les autres dispositifs domotiques de l'installation comme les lampes, volets ou les portes d'accès à l'habitation ou au garage, par exemple, ne seront pas autorisés pour le service Svc2 pour des raisons de sécurité.

Suite à l'étape ECfSvc16 dans le premier cas C1 ou à l'étape ECfSvc19 dans le deuxième cas C2, le premier service procède à une étape ECfSvc110 de configuration en vue de permettre l'acceptation d'ordre de commande en provenance du deuxième service Svc2 ou en vue de l'envoi de données de supervision vers le deuxième service Svc2. En particulier, le premier service Svc1 configure un référentiel de droits d'accès Rf. La structure de ce référentiel a été décrite précédemment. Le premier service Svc1 configure donc le référentiel Rf de façon conforme à la demande d'accès reçue et acceptée par l'utilisateur pour des ressources Rc données afin d'obtenir par exemple une structure telle que décrite dans le tableau 1. Le type d'autorisation donné à un deuxième service Svc2 peut être défini en fonction de règles établies entre la première entité contrôlant le premier service Svc1 et la seconde entité contrôlant le deuxième service Svc2.

Lors de l'étape de configuration, un jeton d'identification Tk peut également être généré pour le deuxième service Svc2 et stocké dans le référentiel Rf. Le jeton peut être communiqué au service Svc2 lors d'une étape ultérieure. La communication du jeton entre le service1 et le service2 peut être réalisée par l'intermédiaire du terminal utilisateur.

Dans une étape ECfSvc111, le premier service Svc1 émet un message d'acceptation/d'inscription vers le deuxième service Svc2 qui est reçu par le deuxième service dans une étape ECfsvc11. Le jeton d'identification Tk peut être communiqué par exemple lors de cette étape ou lors d'une étape distincte.

Dans le deuxième cas C2, Dans une étape ECfsvc212, le deuxième service Svc2 procède à la configuration ou à la création d'un profil ou compte pour l'utilisateur Usr1, avec un identifiant correspondant Usr1ID2, et peut enregistrer la correspondance entre l'identifiant Usr1ID1 de l'utilisateur Usr1 sur le premier service, et l'identifiant Usr1ID2 de l'utilisateur Usr1 sur le deuxième service. Le deuxième service peut également stocker le jeton d'identification Tk.

Dans le deuxième cas C2, dans une étape ECfSvc213, le deuxième service Svc2 communique ensuite une confirmation de la création du compte utilisateur et optionnellement l'identifiant créé Usr1ID2.

Dans le premier cas C1 et le deuxième cas C2, dans une étape ECfSvc114, le premier service Svc1 peut transmettre une description MDesc, ou une vue filtrée de l'installation ou d'un groupe de dispositifs domotiques D comprenant au moins un dispositif, au deuxième service Svc2, qui le reçoit dans une étape ECfsvc214.

Selon une étape additionnelle ECfSvc115, le deuxième service Svc2 peut être inscrit comme souscripteur à des évènements concernant l'au moins un dispositif D concerné par l'accès à distance.

### Deuxième mode de mise en oeuvre

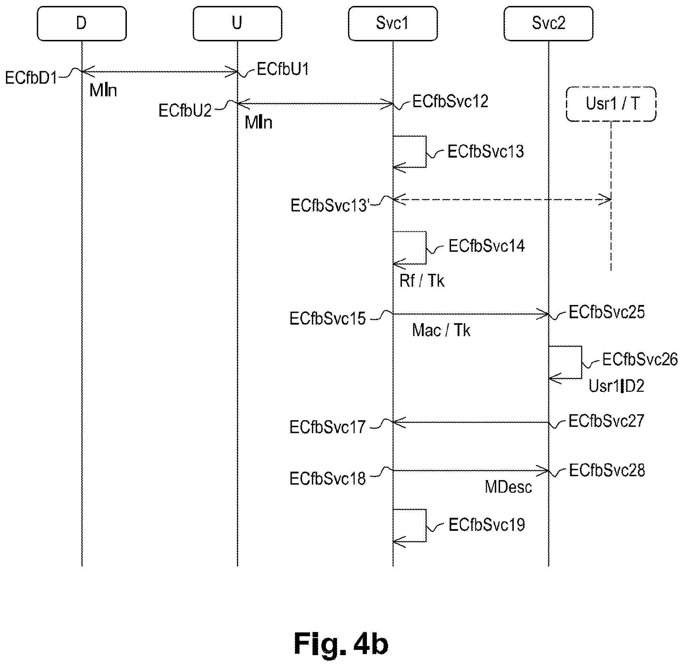

Nous allons à présent décrire un procédé de configuration d'un accès à distance à au moins un dispositif domotique D appartenant à une installation domotique Su en référence à la figure 4b.

Nous supposons que l'utilisateur Usr1 possède un compte utilisateur pour le service Svc1 avec un identifiant Usr1ID1 correspondant.

L'utilisateur Usr1 ou un installateur procède à l'installation d'un dispositif D1 dans son installation domotique Su et à l'appairage de ce dispositif domotique D1 avec une unité centrale de commande U présente dans l'installation ce qui correspond à un échange d'information constituant respectivement les étapes EcfbD1 et EcfbU1. Alternativement, l'échange d'information peut correspondre à l'installation d'une unité centrale de commande U et à la découverte par cette unité centrale de commande U d'un dispositif domotique D précédemment installé. Cet évènement correspond à l'établissement d'une liaison par l'intermédiaire du réseau R1 entre l'unité centrale de commande U et le dispositif domotique D.

L'unité centrale de commande U procède ensuite dans une étape EcfbU2 à l'envoi d'un message d'information concernant la présence ou la découverte du dispositif domotique D1 à destination d'une unité de gestion Sv qui reçoit ce message dans une étape EcfbSvc12.

Dans une étape EcfbSvc13, le premier service Svc1 consulte le référentiel Rf0 de définition de règles d'accès afin de déterminer s'il existe un deuxième service associé au type du dispositif domotique D1 pour lequel un accès à distance doit être configuré avec des règles de filtrage ou d'action correspondantes. Nous supposerons ici qu'un tel service est défini.

Optionnellement, le premier service peut demander dans une étape EcfbSvc13' une autorisation à l'utilisateur final Usr1, par l'intermédiaire d'un terminal utilisateur T préalablement à la configuration de l'accès à distance, et conditionner la configuration de l'accès à une réponse positive de l'utilisateur.

L'accès pour le deuxième service partenaire peut être globale pour une installation donnée rattachée au compte utilisateur de l'utilisateur Usr1, ou ne concerner qu'un groupe de dispositif ou un dispositif domotique D particulier. De la même façon, l'accès peut concerner l'ensemble des variables d'état ou des commandes d'un dispositif, ou concerner un sous-ensemble des variables d'état ou des commandes d'un dispositif concerné en fonction d'un filtrage. A titre d'exemple, dans le cas d'un deuxième service Svc2 visant à proposer une optimisation énergétique, seule la lecture des valeurs des variables d'état S relatives aux dispositifs domotiques D correspondant à des capteurs de température ou des capteurs de consommation et/ou la commande C d'un mode de chauffage (eco, confort) de l'installation peut être autorisé pour le service Svc2. La consultation des variables d'état ou le déclenchement de commande concernant les autres dispositifs domotiques de l'installation comme les lampes, volets ou les portes d'accès à l'habitation ou au garage, par exemple, ne seront pas autorisés pour le service Svc2 pour des raisons de sécurité.

Le premier service Svc1 procède ensuite, dans une étape EcfbSvc14 de configuration en vue de permettre l'acceptation d'ordre de commande en provenance du deuxième service Svc2 ou en vue de l'envoi de données de supervision vers le deuxième service Svc2. En particulier, le premier service Svc1 configure un référentiel de droits d'accès Rf. La structure de ce référentiel a été décrite précédemment. Le premier service Svc1 configure donc le référentiel Rf de façon conforme à la demande d'accès reçue et acceptée par l'utilisateur pour des ressources Rc données afin d'obtenir par exemple une structure telle que décrite dans le tableau 1.

Lors de l'étape de configuration, un jeton d'identification Tk peut également être généré pour le deuxième service Svc2 et stocké dans le référentiel Rf. Le jeton peut être communiqué au service Svc2 lors d'une étape ultérieure.

Dans une étape EcfbSvc15, le premier service Svc1 émet un message d'acceptation/d'inscription vers le deuxième service Svc2 qui est reçu par le deuxième service dans une étape Ecfbsvc25. Le jeton d'identification Tk peut être communiqué par exemple lors de cette étape ou lors d'une étape distincte. Le message peut contenir des informations sur l'utilisateur Usr1 ou son identifiant Usr1lD1 de l'utilisateur Usr1 sur le premier service. Dans le cas où le premier service a demandé une autorisation à l'utilisateur final Usr1 par l'intermédiaire d'un terminal utilisateur T, la transmission du message d'acceptation/d'inscription peut aussi s'effectuer par l'intermédiaire dudit terminal T qui va recevoir le message en réponse à son acceptation auprès de Svc1 et renvoyer ce message au deuxième service Svc2

Dans une étape Ecfbsvc26, le deuxième service Svc2 procède à la configuration ou à la création d'un profil ou compte pour l'utilisateur Usr1, avec un identifiant correspondant Usr1ID2, et peut enregistrer la correspondance entre l'identifiant Usr1ID1 de l'utilisateur Usr1 sur le premier service, et l'identifiant Usr1ID2 de l'utilisateur Usr1 sur le deuxième service. Le deuxième service peut également stocker le jeton d'identification Tk.

Dans une étape EcfbSvc27, le deuxième service Svc2 communique ensuite une confirmation de la création du compte utilisateur et optionnellement l'identifiant créé Usr1ID2.

Dans une étape EcfbSvc18, le premier service Svc1 peut transmettre une description MDesc, ou une vue filtrée de l'installation ou d'un groupe de dispositifs domotiques D comprenant au moins un dispositif, au deuxième service Svc2, qui le reçoit dans une étape Ecfbsvc28.

Selon une étape additionnelle EcfbSvc19, le deuxième service Svc2 peut être inscrit comme souscripteur à des évènements concernant l'au moins un dispositif D concerné par l'accès à distance.

### Procédé de commande

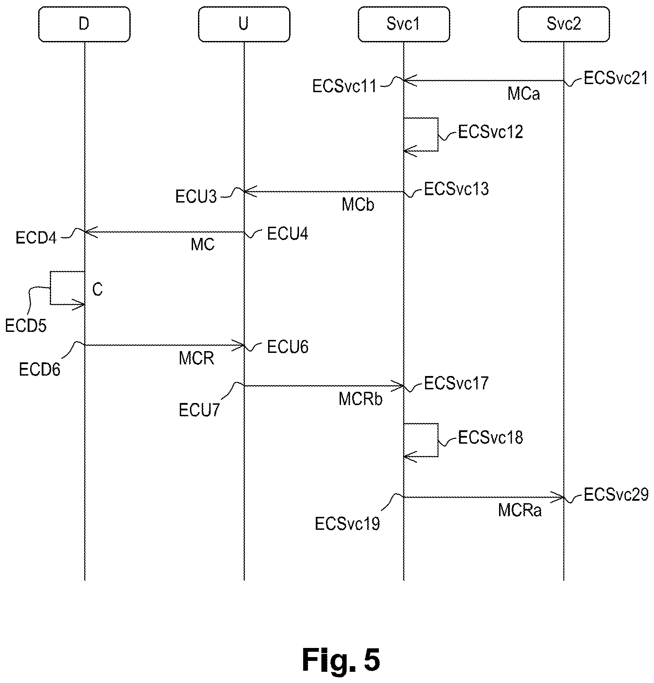

Nous allons à présent décrire un procédé de commande à distance d'au moins un dispositif domotique D appartenant à une installation domotique D en référence à la figure 5. Nous supposons ici que les étapes d'un procédé de configuration ont été réalisées conformément par exemple à ce qui a été exposé précédemment en référence à la figure 4a ou 4b.

Dans une étape ECSvc21, le deuxième service Svc2 émet un message de commande MCa à destination du premier service Svc1 qui le reçoit dans une étape ECSvc11. Ce message concerne un dispositif domotique D, et une commande C à réaliser sur ce dispositif. Le message MCa contient également des éléments d'identification permettant de valider que la demande provient bien d'un deuxième service Svc2 autorisé, tel que le jeton d'identification Tk obtenu lors du procédé de configuration.

Dans une étape ECSvc12, Le service Svc1 opère un contrôle afin de vérifier l'identification du deuxième service Svc2 sur la base par exemple du jeton d'identification. Le service Svc1 vérifie ensuite si une commande demandée dans le message MCa par le service Svc2 est autorisée, c'est-à-dire si elle concerne un dispositif D pour lequel e une autorisation a été donnée lors de la configuration, et/ou si la commande ou la fonction concernée est autorisée pour ce dispositif pour le deuxième service Svc2. En particulier, cette vérification est effectuée auprès du référentiel Rf.

Dans une étape ECSvc13, dans le cas ou la commande C est autorisée pour le service Svc2, le premier service Svc1 émet un message de commande MCb à destination d'une unité centrale de commande U à laquelle est rattachée le dispositif domotique D concerné par la commande C qui le reçoit dans une étape ECU3. Le format de ce message peut être distinct de celui du message MCa, une conversion de format pouvant être réalisée par le premier service.

Dans une étape ECU4, l'unité centrale de commande U émet un message de commande MC à destination du dispositif domotique D concerné par la commande C qui le reçoit dans une étape ECD4. Le format de ce message peut être distinct de celui du message MCb, une conversion de format pouvant être réalisée par l'unité centrale de commande U.

Dans une étape ECD5, le dispositif domotique D effectue la commande C.

Dans une étape ECD6, le code retour ou le résultat de la commande est communiqué dans un message de retour MCR par le dispositif D à l'unité centrale de commande U qui le reçoit dans une étape ECU6.

Dans une étape ECU7, le code retour ou le résultat de la commande est communiqué dans un message de retour MCRb par l'unité centrale de commande U au premier service Svc1 qui le reçoit dans une étape ECSvc17. Le format de ce message peut être distinct de celui du message MCR, une conversion de format pouvant être réalisée par le premier service Svc1.

Dans une étape ECSvc18, le service Svc1 opère une vérification afin de déterminer si le code de retour contenu dans le message MCrb peut être transmis au service Svc2, en particulier si le code de retour de la commande ou la fonction concernée est autorisée pour ce dispositif pour le service Svc2. Cette vérification est réalisée auprès du référentiel Rf.

Dans une étape ECSvc19, dans le cas ou le code retour ou résultat peut être communiqué au deuxième service, le code retour ou le résultat de la commande est communiqué dans un message de retour MCRa par le premier service Svc1 au deuxième service Svc2 qui le reçoit dans une étape ECSvc29. Le format de ce message peut être distinct de celui du message MCRb, une conversion de format pouvant être réalisée par le premier service Svc1.

### Procédé de supervision

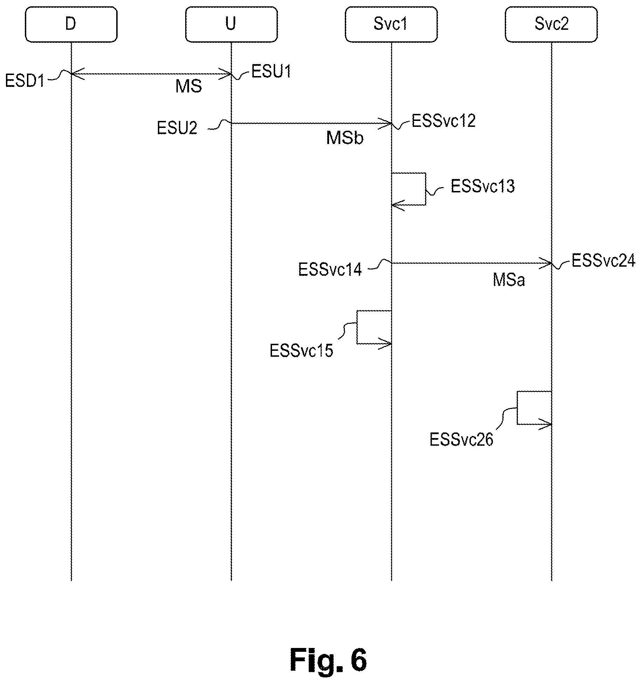

Nous allons à présent décrire un procédé de supervision d'au moins un dispositif domotique D appartenant à une installation domotique Su en référence à la figure 6. Nous supposons ici que les étapes d'un procédé de configuration ont été réalisées conformément par exemple à ce qui a été exposé précédemment en référence à la figure 4a ou 4b.

Dans une étape ESD1, le dispositif domotique D émet un message de supervision MS correspondant à un évènement de changement de valeur d'une variable d'état S à destination d'unité centrale de commande U à laquelle est rattachée le dispositif D considéré, l'unité centrale de commande recevant ce message dans une étape ESU1.

Dans une étape ESU2, l'unité centrale de commande U émet un message de supervision MSb, qui reprend des informations concernant l'évènement de changement de valeur de la variable d'état S ou les traduit dans un format différent, de façon à les transmettre au premier service Svc1, qui reçoit le message MSb dans une étape ESScv12.

Selon une variante, dans le cas ou l'unité centrale de commande U est intégrée dans le dispositif D, la constitution du message de supervision MSb peut être réalisée localement lors de la détection de l'évènement déclencheur correspondant au changement de valeur d'une variable d'état.

Selon une autre variante, dans le cas ou l'unité centrale de commande U est distincte du dispositif D, il est également possible que le dispositif envoie de façon périodique des messages MS et que ce soit l'unité centrale de commande U qui opère une vérification pour repérer les changements de valeur. Enfin il est également possible que des messages de supervision MSb soient envoyés sans constatation de changement de valeur.

Dans une étape ESSvc13, le premier service Svc1 détermine s'il convient d'envoyer un message de supervision MSa au deuxième service. En particulier, le service Svc1 opère un contrôle afin de vérifier l'identification du deuxième service Svc2 sur la base par exemple d'une vérification de la validité du jeton d'identification Tk. Le premier service Svc1 vérifie ensuite s'il existe une autorisation de supervision concernant le dispositif D, c'est-à-dire si elle concerne un dispositif D pour lequel une autorisation a été donnée lors de la configuration et/ou si la communication d'information de supervision concernant la variable d'état S concernée est autorisée pour ce dispositif pour le service Svc2. En particulier, cette vérification est réalisée auprès du référentiel Rf.

Ainsi un filtrage sur un type de variable d'état S peut être réalisé, voire un filtrage sur des plages de valeur de la variable d'état S.

Dans une étape ESSvc14, et dans la mesure où le premier service Svc1 a déterminé qu'un tel message MSa devait être envoyé, le premier service Svc1 émet un message de supervision MSa à destination du deuxième service Svc2, qui reçoit le message dans une étape ESSvcs24.

Sur la figure 6, les étapes ESSvc14 et ESSvc24 figurent une notification entre le premier service Svc1 et le deuxième service Svc2 qui correspond à un envoi direct. Il est toutefois possible que d'autres mécanismes soient utilisés.

En particulier, selon une première variante, un mécanisme de file d'attente peut être mis en œuvre, les messages pouvant être stockés par le premier service sur la file d'attente, et collecté par le deuxième service de façon asynchrone.

D'autres systèmes de type push/pull peuvent également être utilisés.

Dans une étape ESSvc15, un stockage local des informations relatives aux variables d'état peut être réalisé par le premier service Svc1. Il est possible qu'un filtrage des informations soit réalisé à ce stade. Cette configuration est notamment utile dans le cas ou le dispositif D est la propriété ou sous le contrôle d'une deuxième entité en charge du deuxième service Svc2, le premier service Svc1 et éventuellement l'unité centrale de commande, étant sous le contrôle d'une première entité et agissant comme un service d'infrastructure intermédiaire. Ainsi le premier service Svc1 peut jouer le rôle d'un canal de communication entre les dispositifs domotiques D d'une installation domotique Su et un deuxième service Svc2 sans pour autant être autorisé à consulter ou conserver les données dont il assure le transit.

Il est à noter qu'il est également possible qu'aucun stockage ne soit réalisé.

Dans une étape ESSvC26, un stockage local des informations relatives aux variables d'état S peut être réalisé par le deuxième service Svc2.

## Revendications

1. Procédé de configuration d'accès à distance à au moins un dispositif domotique (D) appartenant à une installation domotique (Su) accessible par un premier service d'accès à distance (Svc1) exécuté par une unité de gestion (Sv1), l'installation domotique comprenant l'au moins un dispositif domotique (D) et au moins une unité centrale de commande (U), le procédé étant mis en œuvre par le premier service (Svc1) et comprenant les étapes suivantes :
- Envoi (ECfSvc18) d'au moins un message (MPList) contenant une liste de deuxièmes services disponibles à destination d'un utilisateur (Usr1) ou d'un terminal utilisateur (T) ;
- Réception (ECfSvc19, ECfSvc14), en provenance de l'utilisateur (Usr1), d'une demande d'accès à distance (MP, Min/MAC) concernant l'au moins un dispositif domotique (D) rattaché au profil de l'utilisateur (Usr1) au profit d'un deuxième service d'accès à distance (Svc2) exécuté par une unité de gestion (Sv2) connectée à distance avec l'unité de gestion (Sv1) exécutant le premier service (Svc1), la demande étant relative à un identifiant (Usr1ID1) de l'utilisateur (Usr1ID1) auprès du premier service (Svc1), ledit deuxième service (Svc2) étant sélectionné à partir de la liste de deuxièmes services disponibles contenue dans le message (MPList) ;
- Réception (ECfSvc16, ECfSvc19) d'une autorisation de la demande d'accès à distance émise par l'utilisateur (Usr1) ;
- Configuration (ECfSvc110) d'un référentiel de droit d'accès (Rf) afin d'accepter au moins un ordre de commande (MCa) en provenance du deuxième service (Svc2) ou un envoi de données de supervision (MSa) vers le deuxième service (Svc2) pour le compte du dispositif domotique (D) rattaché au profil de l'utilisateur (Usr1) ; et
- Envoi (ECfSvc111) d'un message d'acceptation/d'inscription à destination du deuxième service (Svc2).

2. Procédé selon la revendication 1, dans lequel l'étape de configuration (ECfSvc110) comprend une étape de génération d'un jeton d'identification (Tk) pour le deuxième service (Svc2).

3. Procédé selon l'une quelconque des revendications 1 ou 2, dans lequel la demande d'accès à distance est reçue en provenance du deuxième service (Svc2).

4. Procédé selon la revendication 3, comprenant l'étape suivante, préalable à l'étape (ECfSvc16) de réception d'une autorisation :
- Demande (ECfSvc15) d'une acceptation ou une confirmation de la demande d'accès au profit du deuxième service (Svc2) à l'utilisateur (Usr1).

5. Procédé selon l'une des revendications 1 à 4, comprenant en outre l'étape suivante, préalable à l'étape d'envoi d'un message (MPList) contenant la liste des deuxièmes services disponibles :
- Réception (ECfSvc17) d'un message de requête (MPreq) en provenance de l'utilisateur (Usr1) afin d'obtenir la liste des deuxièmes services disponibles auprès du premier service (Svc1).

6. Procédé selon l'une des revendications précédentes, comprenant l'étape suivante :
- Envoi (ECfSvc114) d'au moins un message de description (MDesc), ou de transmission d'une vue filtrée de l'installation domotique (Su) ou d'un groupe de dispositifs domotiques comprenant l'au moins un dispositif domotique (D), à destination du deuxième service (Svc2).

7. Procédé de commande à distance d'au moins un dispositif domotique (D) appartenant à une installation domotique (Su), l'installation domotique étant accessible par un premier service d'accès à distance (Svc1) exécuté par une unité de gestion (Sv1) et comprenant l'au moins un dispositif domotique (D) et au moins une unité centrale de commande (U), le procédé étant mis en œuvre par le premier service (Svc1) et comprenant les étapes suivantes :
- Envoi (ECfSvc18) d'au moins un message (MPList) contenant une liste de deuxièmes services disponibles à destination d'un utilisateur (Usr1) ou d'un terminal utilisateur (T) ;
- Réception (ECfSvc19, ECfSvc14), en provenance de l'utilisateur (Usr1), d'une demande d'accès à distance (MP, Min/MAC) concernant l'au moins un dispositif domotique (D) rattaché au profil de l'utilisateur (Usr1) au profit d'un deuxième service d'accès à distance (Svc2) exécuté par une unité de gestion (Sv2) connectée à distance avec l'unité de gestion (Sv1) exécutant le premier service (Svc1), la demande étant relative à un identifiant (Usr1ID1) de l'utilisateur (Usr1ID1) auprès du premier service (Svc1), ledit deuxième service (Svc2) étant sélectionné à partir de la liste de deuxièmes services disponibles contenue dans le message (MPList);
- Réception (ECfSvc16, ECfSvc19) d'une autorisation de la demande d'accès à distance émise par l'utilisateur (Usr1) ;
- Configuration (ECfSvc110) d'un référentiel de droit d'accès (Rf) afin d'accepter au moins un ordre de commande (MCa) en provenance du deuxième service (Svc2) ou un envoi de données de supervision (MSa) vers le deuxième service (Svc2) pour le compte du dispositif domotique (D) rattaché au profil de l'utilisateur (Usr1) ; et
- Envoi (ECfSvc111) d'un message d'acceptation/d'inscription à destination du deuxième service (Svc2) ;
- Réception (ECSvc11) d'un message de commande (MCa) concernant au moins une commande (C) à réaliser sur l'au moins un dispositif domotique (D) en provenance du deuxième service d'accès à distance (Svc2) exécuté par l'unité de gestion (Sv2) connectée à distance avec l'unité de gestion (Sv1) exécutant le premier service (Svc1) ;
- Vérification (ECSvc12), auprès du référentiel de droits d'accès (Rf), d'une autorisation de la commande (C) demandée dans le message (MCa) pour le service (Svc2);
- Dans le cas où la commande (C) est autorisée pour le deuxième service (Svc2), envoi (ECSvc13) d'au moins un message de commande (MCb) à destination de l'au moins une unité centrale de commande (U) à laquelle est rattachée l'au moins un dispositif domotique (D) concerné par la commande (C).

8. Procédé selon la revendication 7, dans lequel :
- Le message de commande (MCa) concernant au moins une commande (C) à réaliser sur l'au moins un dispositif domotique (D) en provenance d'un deuxième service (Svc2) comprend un jeton d'identification (Tk) ;
Le procédé comprenant en outre
- Une étape de vérification (ECSvc12) de la validité du jeton d'identification (Tk) pour le service (Svc2) auprès du référentiel de droits d'accès (Rf).

9. Procédé selon l'une quelconque des revendications 7 ou8, comprenant en outre les étapes suivantes :
- Réception (ECSvc17) d'un message de retour (MCRb) en provenance de l'au moins une unité centrale de commande (U) à laquelle est rattaché l'au moins un dispositif (D).
- Vérification (ECSvc18) d'une autorisation d'envoi d'un message de retour (MCRa) pour la commande (C) au service (Svc2) auprès du référentiel de droits d'accès (Rf) ;
- Dans le cas où l'envoi du message de retour (MCRa) est autorisé pour le deuxième service (Svc2), envoi (ECSvc19) du message de retour (MCRa) à destination du deuxième service (Svc2), ledit message de retour (MCRa) comprenant un code de retour de commande (C).

10. Procédé de supervision à distance d'au moins un dispositif domotique (D) appartenant à une installation domotique (Su), l'installation domotique étant accessible par un premier service d'accès à distance (Svc1) exécuté par une unité de gestion (Sv1) et comprenant l'au moins un dispositif domotique (D) et au moins une unité centrale de commande (U), le procédé étant mis en œuvre par le premier service (Svc1) et comprenant les étapes suivantes :
- Envoi (ECfSvc18) d'au moins un message (MPList) contenant une liste de deuxièmes services disponibles à destination d'un utilisateur (Usr1) ou d'un terminal utilisateur (T) ;
- Réception (ECfSvc19, ECfSvc14) , en provenance de l'utilisateur (Usr1), d'une demande d'accès à distance (MP, Min/MAC) concernant l'au moins un dispositif domotique (D) rattaché au profil de l'utilisateur (Usr1) au profit d'un deuxième service d'accès à distance (Svc2) exécuté par une unité de gestion (Sv2) connectée à distance avec l'unité de gestion (Sv1) exécutant le premier service (Svc1), la demande étant relative à un identifiant (Usr1ID1) de l'utilisateur (Usr1ID1) auprès du premier service (Svc1), ledit deuxième service (Svc2) étant sélectionné à partir de la liste de deuxièmes services disponibles contenue dans le message (MPList);
- Réception (ECfSvc16, ECfSvc19) d'une autorisation de la demande d'accès à distance émise par l'utilisateur (Usr1) ;
- Configuration (ECfSvc110) d'un référentiel de droit d'accès (Rf) afin d'accepter au moins un ordre de commande (MCa) en provenance du deuxième service (Svc2) ou un envoi de données de supervision (MSa) vers le deuxième service (Svc2) pour le compte du dispositif domotique (D) rattaché au profil de l'utilisateur (Usr1) ; et
- Envoi (ECfSvc111) d'un message d'acceptation/d'inscription à destination du deuxième service (Svc2).
- Réception (ESSvc12) d'un message de supervision (MSb) en provenance de l'au moins une unité centrale de commande (U) comprenant des informations concernant au moins une variable d'état (S) de l'au moins un dispositif domotique (D) rattaché à l'au moins une unité centrale de commande (U).
- Vérification (ESSvc13) auprès du référentiel de droits d'accès (Rf), d'une autorisation d'envoi d'un message de supervision (MSa) concernant l'au moins une variable d'état (S) de l'au moins un dispositif domotique (D) au deuxième service d'accès à distance (Svc2) exécuté par l'unité de gestion (Sv2) connectée à distance avec l'unité de gestion (Sv1) exécutant le premier service (Svc1) ;
- Dans le cas où l'envoi du message de supervision (MSa) est autorisé, envoi (ESSvc14) du message de supervision (MSa) à destination du deuxième service (Svc2).

11. Procédé selon la revendication 10, comprenant en outre l'étape suivante :
- Stockage (ESSvc15) des informations concernant l'au moins une variable d'état (S) par le premier service (Svc1).

## Patentansprüche

1. Verfahren zum Konfigurieren des Fernzugriffs auf mindestens eine Hausautomatisierungsvorrichtung (D), die zu einer Hausautomatisierungsanlage (Su) gehört, die über einen ersten Fernzugriffsdienst (Svc1) zugänglich ist, der von einer Verwaltungseinheit (Sv1) ausgeführt wird, wobei die Hausautomatisierungsanlage die mindestens eine Hausautomatisierungsvorrichtung (D) und mindestens eine zentrale Steuereinheit (U) umfasst, wobei das Verfahren von dem ersten Dienst (Svc1) implementiert wird und die folgenden Schritte umfasst:
- Senden (ECfSvc18) mindestens einer Nachricht (MPList), die eine Liste von verfügbaren zweiten Diensten enthält, an einen Benutzer (Usr1) oder ein Benutzerendgerät (T);
- Empfangen (ECfSvc19, ECfSvc14) einer vom Benutzer (Usr1) stammenden Fernzugriffsanfrage (MP, Min/MAC) bezüglich der mindestens einen Hausautomatisierungsvorrichtung (D), die dem Benutzerprofil (Usr1) zugeordnet ist, zugunsten eines zweiten Fernzugriffsdienstes (Svc2), der von einer Verwaltungseinheit (Sv2) ausgeführt wird, die über eine Fernverbindung mit der Verwaltungseinheit (Sv1) verbunden ist, die den ersten Dienst (Svc1) ausführt, wobei sich die Anfrage auf eine Kennung (Usr1ID1) des Benutzers (Usr1ID1) beim ersten Dienst (Svc1) bezieht, wobei der zweite Dienst (Svc2) aus der in der Nachricht (MPList) enthaltenen Liste verfügbarer zweiter Dienste ausgewählt wird;
- Empfangen (ECfSvc16, ECfSvc19) einer Berechtigung der vom Benutzer (Usr1) gestellten Fernzugriffsanfrage;
- Konfigurieren (ECfSvc110) eines Datenspeichers für Zugriffsrechte (Rf), um mindestens einen Steuerbefehl (MCa) vom zweiten Dienst (Svc2) oder ein Senden von Überwachungsdaten (MSa) an den zweiten Dienst (Svc2) im Namen der dem Benutzerprofil (Usr1) zugeordneten Hausautomatisierungsvorrichtung (D) anzunehmen; und
- Senden (ECfSvc111) einer Annahme-/Registrierungsnachricht an den zweiten Dienst (Svc2).

2. Verfahren nach Anspruch 1, wobei der Konfigurationsschritt (ECfSvc110) einen Schritt des Generierens eines Identifikations-Tokens (Tk) für den zweiten Dienst (Svc2) umfasst.

3. Verfahren nach einem der Ansprüche 1 oder 2, wobei die Fernzugriffsanfrage vom zweiten Dienst (Svc2) empfangen wird.

4. Verfahren nach Anspruch 3, das vor dem Schritt (ECfSvc16) des Empfangens einer Berechtigung den folgenden Schritt umfasst:
- Anfragen (ECfSvc15) nach einer Annahme oder Bestätigung der Zugriffsanfrage zugunsten des zweiten Dienstes (Svc2) an den Benutzer (Usr1).

5. Verfahren nach einem der Ansprüche 1 bis 4, das ferner vor dem Schritt des Sendens einer Nachricht (MPList), die die Liste der verfügbaren zweiten Dienste enthält, den folgenden Schritt umfasst:
- Empfangen (ECfSvc17) einer vom Benutzer (Usr1) stammenden Abfragenachricht (MPreq) , um die Liste der verfügbaren zweiten Dienste vom ersten Dienst (Svc1) zu erhalten.

6. Verfahren nach einem der vorhergehenden Ansprüche, das den folgenden Schritt umfasst:
- Senden (ECfSvc114) mindestens einer Beschreibungsnachricht (MDesc) oder Übertragen einer gefilterten Ansicht der Hausautomatisierungsanlage (Su) oder einer Gruppe von Hausautomatisierungsvorrichtungen, die mindestens eine Hausautomatisierungsvorrichtung (D) umfasst, an den zweiten Dienst (Svc2).

7. Fernsteuerungsverfahren für mindestens eine Hausautomatisierungsvorrichtung (D), die zu einer Hausautomatisierungsanlage (Su) gehört, wobei die Hausautomatisierungsanlage über einen ersten Fernzugriffsdienst (Svc1) zugänglich ist, der von einer Verwaltungseinheit (Sv1) ausgeführt wird und die mindestens eine Hausautomatisierungsvorrichtung (D) und mindestens eine zentrale Steuereinheit (U) umfasst, wobei das Verfahren von dem ersten Dienst (Svc1) implementiert wird und die folgenden Schritte umfasst:
- Senden (ECfSvc18) mindestens einer Nachricht (MPList), die eine Liste von verfügbaren zweiten Diensten enthält, an einen Benutzer (Usr1) oder ein Benutzerendgerät (T);
- Empfangen (ECfSvc19, ECfSvc14) einer vom Benutzer (Usr1) stammenden Fernzugriffsanfrage (MP, Min/MAC) bezüglich der mindestens einen Hausautomatisierungsvorrichtung (D), die dem Benutzerprofil (Usr1) zugeordnet ist, zugunsten eines zweiten Fernzugriffsdienstes (Svc2), der von einer Verwaltungseinheit (Sv2) ausgeführt wird, die über eine Fernverbindung mit der Verwaltungseinheit (Svl) verbunden ist, die den ersten Dienst (Svc1) ausführt,
wobei sich die Anfrage auf eine Kennung (Usr1ID1) des Benutzers (Usr1ID1) beim ersten Dienst (Svc1) bezieht, wobei der zweite Dienst (Svc2) aus der in der Nachricht (MPList) enthaltenen Liste verfügbarer zweiter Dienste ausgewählt wird;
- Empfangen (ECfSvc16, ECfSvc19) einer Berechtigung der vom Benutzer (Usr1) gestellten Fernzugriffsanfrage;
- Konfigurieren (ECfSvc110) eines Datenspeichers für Zugriffsrechte (Rf), um mindestens einen Steuerbefehl (MCa) vom zweiten Dienst (Svc2) oder ein Senden von Überwachungsdaten (MSa) an den zweiten Dienst (Svc2) im Namen der dem Benutzerprofil (Usr1) zugeordneten Hausautomatisierungsvorrichtung (D) anzunehmen; und
- Senden (ECfSvc111) einer Annahme-/Registrierungsnachricht an den zweiten Dienst (Svc2);
- Empfangen (ECSvc11) einer Befehlsnachricht (MCa) bezüglich mindestens eines Befehls (C), der an der mindestens einen Hausautomatisierungsvorrichtung (D) auszuführen ist, von dem zweiten Fernzugriffsdienst (Svc2), der von der Verwaltungseinheit (Sv2) ausgeführt wird, die über eine Fernverbindung mit der Verwaltungseinheit (Sv1) verbunden ist, die den ersten Dienst (Svc1) ausführt;
- Überprüfen (ECSvc12) einer Berechtigung des in der Nachricht (MCa) für den Dienst (Svc2) angeforderten Befehls (C) mithilfe des Datenspeichers für Zugriffsrechte (Rf) ;
- falls der Befehl (C) für den zweiten Dienst (Svc2) zugelassen ist, Senden (ECSvc13) mindestens einer Befehlsnachricht (MCb) an die mindestens eine zentrale Steuereinheit (U), an die die mindestens eine von dem Befehl (C) betroffene Hausautomatisierungsvorrichtung (D) angeschlossen ist.

8. Verfahren nach Anspruch 7, wobei:
- die Befehlsnachricht (MCa) bezüglich mindestens eines Befehls (C), der an der mindestens einen Hausautomatisierungsvorrichtung (D) auszuführen ist und von einem zweiten Dienst (Svc2) stammt, ein Identifikations-Token (Tk) umfasst;
wobei das Verfahren ferner Folgendes umfasst:
- einen Schritt des Überprüfens (ECSvc12) der Gültigkeit des Identifikations-Tokens (Tk) für den Dienst (Svc2) mithilfe des Datenspeichers für Zugriffsrechte (Rf).

9. Verfahren nach einem der Ansprüche 7 oder 8, das ferner die folgenden Schritte umfasst:
- Empfangen (ECSvc17) einer Rückmeldenachricht (MCRb) von der mindestens einen zentralen Steuereinheit (U), an die die mindestens eine Vorrichtung (D) angeschlossen ist.
- Überprüfen (ECSvc18) einer Berechtigung zum Senden einer Rückmeldenachricht (MCRa) für den Befehl (C) an den Dienst (Svc2) mithilfe des Datenspeichers für Zugriffsrechte (Rf);
- falls das Senden der Rückmeldenachricht (MCRa) für den zweiten Dienst (Svc2) zugelassen ist, Senden (ECSvc19) der Rückmeldenachricht (MCRa) an den zweiten Dienst (Svc2), wobei die Rückmeldenachricht (MCRa) einen Befehlsrückmeldecode (C) umfasst.

10. Fernüberwachungsverfahren für mindestens eine Hausautomatisierungsvorrichtung (D), die zu einer Hausautomatisierungsanlage (Su) gehört, wobei die Hausautomatisierungsanlage über einen ersten Fernzugriffsdienst (Svc1) zugänglich ist, der von einer Verwaltungseinheit (Sv1) ausgeführt wird und die mindestens eine Hausautomatisierungsvorrichtung (D) und mindestens eine zentrale Steuereinheit (U) umfasst, wobei das Verfahren vom ersten Dienst (Svc1) implementiert wird und die folgenden Schritte umfasst:
- Senden (ECfSvc18) mindestens einer Nachricht (MPList), die eine Liste von verfügbaren zweiten Diensten enthält, an einen Benutzer (Usr1) oder ein Benutzerendgerät (T);
- Empfangen (ECfSvc19, ECfSvc14) einer vom Benutzer (Usr1) stammenden Fernzugriffsanfrage (MP, Min/MAC) bezüglich der mindestens einen Hausautomatisierungsvorrichtung (D), die dem Benutzerprofil (Usr1) zugeordnet ist, zugunsten eines zweiten Fernzugriffsdienstes (Svc2), der von einer Verwaltungseinheit (Sv2) ausgeführt wird, die über eine Fernverbindung mit der Verwaltungseinheit (Sv1) verbunden ist, die den ersten Dienst (Svc1) ausführt, wobei sich die Anfrage auf eine Kennung (Usr1ID1) des Benutzers (Usr1ID1) beim ersten Dienst (Svc1) bezieht, wobei der zweite Dienst (Svc2) aus der in der Nachricht (MPList) enthaltenen Liste verfügbarer zweiter Dienste ausgewählt wird;
- Empfangen (ECfSvc16, ECfSvc19) einer Berechtigung der vom Benutzer (Usr1) gestellten Fernzugriffsanfrage;
- Konfigurieren (ECfSvc110) eines Datenspeichers für Zugriffsrechte (Rf), um mindestens einen Steuerbefehl (MCa) vom zweiten Dienst (Svc2) oder ein Senden von Überwachungsdaten (MSa) an den zweiten Dienst (Svc2) im Namen der dem Benutzerprofil (Usr1) zugeordneten Hausautomatisierungsvorrichtung (D) anzunehmen; und
- Senden (ECfSvc111) einer Annahme-/Registrierungsnachricht an den zweiten Dienst (Svc2).
- Empfangen (ESSvc12) einer Überwachungsnachricht (MSb) von der mindestens einen zentralen Steuereinheit (U), die Informationen über mindestens eine Zustandsvariable (S) der mindestens einen Hausautomatisierungsvorrichtung (D) umfasst, die der mindestens einen zentralen Steuereinheit (U) zugeordnet ist.
- Überprüfen (ESSvc13) einer Berechtigung zum Senden einer Überwachungsnachricht (MSa) bezüglich der mindestens einen Zustandsvariablen (S) der mindestens einen Hausautomatisierungsvorrichtung (D) an den zweiten Fernzugriffsdienst (Svc2), der von der Verwaltungseinheit (Sv2) ausgeführt wird, die über eine Fernverbindung mit der Verwaltungseinheit (Sv1) verbunden ist, die den ersten Dienst (Svc1) ausführt, mithilfe des Datenspeichers für Zugriffsrechte (Rf) ;
- falls das Senden der Überwachungsnachricht (MSa) zugelassen ist, Senden (ESSvc14) der Überwachungsnachricht (MSa) an den zweiten Dienst (Svc2).

11. Verfahren nach Anspruch 10, ferner umfassend den folgenden Schritt:
- Speichern (ESSvc15) von Informationen über die mindestens eine Zustandsvariable (S) durch den ersten Dienst (Svc1).

## Claims

1. A method for configuring remote access to at least one home automation device (D) belonging to a home automation installation (Su) accessible by a first remote access service (Svc1) executed by a management unit (Sv1), the home automation installation comprising the at least one home automation device (D) and at least one central control unit (U), the method being implemented by the first service (Svc1) and comprising the following steps:
- Sending (ECfSvc18) at least one message (MPList) containing a list of second services available to a user (Usr1) or a user terminal (T);
- Receiving (ECfSvc19, ECfSvc14), from the user (Usr1), a remote access request (MP, Min/MAC) concerning at least one home automation device (D) attached to the user's profile (Usr1) for a second remote access service (Svc2) executed by a management unit (Sv2) remotely connected to the management unit (Sv1) executing the first service (Svc1), the request relating to an identifier (Usr1ID1) of the user (Usr1ID1) with the first service (Svc1), said second service (Svc2) being selected from the list of available second services contained in the message (MPList);
- Receiving (ECfSvc16, ECfSvc19) an authorization of the remote access request issued by the user (Usr1);
- Configuring (ECfSvc110) an access rights repository (Rf) in order to accept at least one control command (MCa) from the second service (Svc2) or a transmission of supervision data (MSa) to the second service (Svc2) on behalf of the home automation device (D) attached to the user's profile (Usr1); and
- Sending (ECfSvc111) an acceptance/registration message to the second service (Svc2).

2. The method according to claim 1, wherein the configuration step (ECfSvc110) comprises a step of generating an identification token (Tk) for the second service (Svc2).

3. The method according to any one of claims 1 or 2, wherein the remote access request is received from the second service (Svc2).

4. The method according to claim 3, comprising the following step, prior to the step (ECfSvc16) of receiving an authorization:
- Requesting (ECfSvc15) an acceptance or confirmation of the access request for the benefit of the second service (Svc2) to the user (Usr1).

5. The method according to any of claims 1 to 4, further comprising the following step, prior to the step of sending a message (MPList) containing the list of available second services:
- Receiving (ECfSvc17) a request message (MPreq) from the user (Usr1) in order to obtain the list of second services available from the first service (Svc1).

6. The method according to any of the preceding claims, comprising the following step:
- Sending (ECfSvc114) at least one description message (MDesc), or transmitting a filtered view of the home automation installation (Su) or a group of home automation devices comprising at least one home automation device (D), to the second service (Svc2).

7. The method for remotely controlling at least one home automation device (D) belonging to a home automation installation (Su), the home automation installation being accessible via a first remote access service (Svc1) executed by a management unit (Sv1) and comprising the at least one home automation device (D) and at least one central control unit (U), the method being implemented by the first service (Svc1) and comprising the following steps:
- Sending (ECfSvc18) at least one message (MPList) containing a list of second services available to a user (Usr1) or a user terminal (T);
- Receiving (ECfSvc19, ECfSvc14), from the user (Usr1), a remote access request (MP, Min/MAC) concerning the at least one home automation device (D) attached to the profile of the user (Usr1) for the benefit of a second remote access service (Svc2) executed by a management unit (Sv2) remotely connected with the management unit (Sv1) executing the first service (Svc1), the request relating to an identifier (Usr1ID1) of the user (Usr1ID1) with the first service (Svc1), said second service (Svc2) being selected from the list of available second services contained in the message (MPList);
- Receiving (ECfSvc16, ECfSvc19) an authorization of the remote access request issued by the user (Usr1);
- Configuring (ECfSvc110) an access rights repository (Rf) in order to accept at least one command order (MCa) from the second service (Svc2) or a transmission of a supervision data (MSa) to the second service (Svc2) on behalf of the home automation device (D) attached to the user profile (Usr1); and
- Sending (ECfSvc111) an acceptance/registration message to the second service (Svc2);
- Receiving (ECSvc11) a command message (MCa) concerning at least one command (C) to be performed on the at least one home automation device (D) from the second remote access service (Svc2) executed by the management unit (Sv2) remotely connected to the management unit (Sv1) executing the first service (Svc1);
- Verifying (ECSvc12), with the access rights repository (Rf), an authorization of the command (C) requested in the message (MCa) for the service (Svc2);
- In the case where the command (C) is authorized for the second service (Svc2), sending (ECSvc13) at least one command message (MCb) to the at least one central control unit (U) to which the at least one home automation device (D) concerned by the command (C) is attached.

8. The method according to claim 7, wherein:
- The command message (MCa) concerning at least one command (C) to be carried out on the at least one home automation device (D) originating from a second service (Svc2) comprises an identification token (Tk);
The method further comprising
- A step of verifying (ECSvc12) the validity of the identification token (Tk) for the service (Svc2) with the access rights repository (Rf).

9. The method according to any one of claims 7 or 8, further comprising the following steps:
- Receiving (ECSvc17) a return message (MCRb) from the at least one central control unit (U) to which the at least one device (D) is attached.
- Verifying (ECSvc18) an authorization to send a return message (MCRa) for the command (C) to the service (Svc2) with the access rights repository (Rf);
- In the case where sending the return message (MCRa) is authorized for the second service (Svc2), sending (ECSvc19) the return message (MCRa) to the second service (Svc2), said return message (MCRa) comprising a command return code (C).

10. A method for remotely monitoring at least one home automation device (D) belonging to a home automation installation (Su), the home automation installation being accessible via a first remote access service (Svc1) executed by a management unit (Sv1) and comprising the at least one home automation device (D) and at least one central control unit (U), the method being implemented by the first service (Svc1) and comprising the following steps:
- Sending (ECfSvc18) at least one message (MPList) containing a list of second services available to a user (Usr1) or a user terminal (T);
- Receiving (ECfSvc19, ECfSvc14), from the user (Usr1), a remote access request (MP, Min/MAC) concerning the at least one home automation device (D) attached to the profile of the user (Usr1) for the benefit of a second remote access service (Svc2) executed by a management unit (Sv2) remotely connected to the management unit (Sv1) executing the first service (Svc1), the request relating to an identifier (Usr1ID1) of the user (Usr1ID1) with the first service (Svc1), said second service (Svc2) being selected from the list of available second services contained in the message (MPList);
- Receiving (ECfSvc16, ECfSvc19) an authorization of the remote access request issued by the user (Usr1);
- Configuring (ECfSvc110) an access rights repository (Rf) in order to accept at least one command order (MCa) from the second service (Svc2) or a transmission of a supervision data (MSa) to the second service (Svc2) on behalf of the home automation device (D) attached to the user profile (Usr1); and
- Sending (ECfSvc111) an acceptance/registration message to the second service (Svc2);
- Receiving (ESSvc12) a supervision message (MSb) from the at least one central control unit (U), comprising information relating to at least one state variable (S) of the at least one automation device (D) attached to the at least one central control unit (U);
- Verifying (ESSvc13) with the access rights repository (Rf), an authorization of sending a supervision message (MSa) relating to the at least one state variable (S) of the at least one automation device (D) to the second remote access service (Svc2), executed by the management unit (Sv2) remotely connected to the management unit (Sv1) executing the first service (Svc1);
- In the case where sending the supervision message (MSa) is authorized, sending (ESSvc14) the supervision message (MSa) to the second service (Svc2).

11. The method according to claim 10, further comprising the following steps:
- Storing (ESSvc15) the information relating to the at least one state variable (S) by the first service (Svc1).
